# EUROPÄISCHE PATENTSCHRIFT

(11) **EP 2 191 174 B1**
(45) Veröffentlichungstag und Bekanntmachung des Hinweises auf die Patenterteilung: **28.03.2012**
(21) Anmeldenummer: 08787113.3
(22) Anmeldetag: 11.08.2008
(51) Int. Cl.: F16H 63/30, F16B 21/10, B29C 45/00

(54) **GLEITLAGERANORDNUNG FÜR EIN BEWEGBARES SCHALTELEMENT IN EINER SCHALTVORRICHTUNG SOWIE SCHALTVORRICHTUNG MIT DER GLEITLAGERANORDNUNG**
SLIDING BEARING ARRANGEMENT FOR A MOVEABLE GEAR-CHANGING ELEMENT IN A GEAR-CHANGING DEVICE, AND GEAR-CHANGING DEVICE WITH THE SLIDING BEARING ARRANGEMENT
ENSEMBLE PALIER À GLISSEMENT POUR UN ÉLÉMENT MOBILE DE CHANGEMENT DE VITESSE DANS UN DISPOSITIF DE CHANGEMENT DE VITESSE, ET DISPOSITIF DE CHANGEMENT DE VITESSE POURVU DE L'ENSEMBLE PALIER À GLISSEMENT

(30) Priorität: 12.09.2007 DE 102007043473
(43) Veröffentlichungstag der Anmeldung: 02.06.2010
(73) Patentinhaber: Schaeffler Technologies AG & Co. KG, 91074 Herzogenaurach (DE)
(72) Erfinder: FEUERBACH, Matthias, 97070 Würzburg (DE); SCHWARZ, Uwe, 91052 Erlangen (DE)
(86) Internationale Anmeldenummer: PCT/EP2008/060539
(87) Internationale Veröffentlichungsnummer: WO 2009/033907

(56) Entgegenhaltungen:
- EP-A- 1 484 515
- DE-A1- 10 123 960
- GB-A- 2 105 178
- GB-A- 2 145 993
- US-A- 4 987 639

## Beschreibung

### Gebiet der Erfindung

Die Erfindung betrifft eine Gleitlageranordnung mit einem Gleitstück zum Aufsetzen auf ein bewegbares Schaltelement einer Schaltvorrichtung, sowie eine Schaltvorrichtung mit dieser Gleitlageranordnung.

Derartige Gleitlageranordnungen werden eingesetzt, um beispielsweise Schaltschienen in Schaltvorrichtungen für Getriebe bei einer Linearverschiebung in deren Längserstreckung gegenüber einem Gehäuse oder einem anderen Lagerungspartner zu lagern.

Die Druckschrift DE 10 123 960 A1, die wohl den nächstkommenden Stand der Technik bildet, offenbart eine Schaltvorrichtung eines Schaltgetriebes mit einem zumindest entlang seiner Längsachse in dem Schaltgetriebe verschiebbaren Schaltelement, welches einen das Schaltelement zumindest abschnittsweise und teilweise umgreifendes Gleitlager zur verschiebbaren Lagerung des Schaltelements aufweist. Das Gleitlager ist als eine Gleithülse aus Kunststoff ausgebildet, die eine Aufnahme aufweist, in die das verschiebbare Schaltelement mit seinem Endabschnitt eingesetzt werden kann. Die Aufnahme weist eine Oberflächenstrukturierung auf, die so ausgebildet ist, dass der eingeschobene Abschnitt des Schaltelements nach dem Einschieben reibschlüssig gehalten wird. Zur Sicherung der Gleithülse weist diese einen durchgehenden Führungskanal auf, welcher senkrecht zu der Längserstreckung des Schaltelements ausgerichtet ist und in den ein Sperrstift einführbar ist, welcher eine Durchgangsöffnung in dem eingeschobenen Abschnitt des Schaltelements durchstößt und auf diese Weise den Abschnitt bzw. das Schaltelement formschlüssig in der Gleithülse sperrt.

### Beschreibung

Der Erfindung liegt die Aufgabe zugrunde, eine Gleitlageranordnung bzw. eine Schaltvorrichtung mit der Gleitlageranordnung vorzuschlagen, wobei sich die Gleitlageranordnung durch günstige Herstellungskosten und/oder gute Montierbarkeit auszeichnet.

Diese Aufgabe wird durch eine Gleitlageranordnung mit den Merkmalen des Anspruchs 1 sowie mit einer Schaltvorrichtung mit den Merkmalen des Anspruchs 12 gelöst. Vorteilhafte oder bevorzugte Ausführungsformen der Erfindung ergeben sich aus den Unteransprüchen, der nachfolgenden Beschreibung und den beigefügten Figuren.

Erfindungsgemäß wird eine Gleitlageranordnung vorgestellt, welche ein Gleitstück aufweist, die zum Aufsetzen auf ein bewegbares Schaltelement einer Schaltvorrichtung ausgebildet und/oder geeignet ist. Die Schaltvorrichtung dient zum Schalten eines beliebigen Getriebes, insbesondere des Schaltgetriebes eines Kraftfahrzeugs.

Das Gleitstück weist einen Aufnahmebereich zur Aufnahme des bewegbaren Schaltelements auf, welcher insbesondere als Aussparung ausgebildet ist. Vorzugsweise ist der Aufnahmebereich so ausgelegt, dass das bewegbare Schaltelement in diesem klemmend und/oder kraftschlüssig und/oder reibschlüssig festgelegt ist. Vorzugsweise an der Außenseite verfügt das Gleitstück über einen Gleitabschnitt, welcher zur Zusammenwirkung mit einem Lagerungspartner zur gleitenden Lagerung des Schaltelements ausgebildet ist. Der Lagerungspartner ist bevorzugt starr mit einem Gehäuse der Schaltvorrichtung und/oder des Getriebes verbunden und insbesondere darin, z.B. als sacklochartige Aufnahme eingeformt.

Um nach einem Aufsetzen des Gleitstücks auf dem bewegbaren Schaltelement dieses verlustsicher zu arretieren ist ein Fixierungsstift vorgesehen, welcher bevorzugt eine längliche Gestalt aufweist, die im Querschnitt rund oder oval ausgebildet ist. Bei abgewandelten Ausführungsformen kann der Querschnitt eine beliebige, insbesondere eine mehreckige Form aufweisen.

Erfindungsgemäß wird vorgeschlagen, dass in einem unmontierten Zustand der Gleitlageranordnung vor dem Aufsetzendes Gleitstücks der Fixierungsstift und das Gleitstück einstückig als gemeinsames kunststoffteil miteinander verbunden sind.

Diese Ausbildung hat den Vorteil, dass zum einen der Fixierungsstift und das Gleitstück einstückig gefertigt werden können, so dass Herstellungskosten minimiert sind, und zum anderen, dass optional bereits eine Vorpositionierung erreicht werden kann, die das Einbringen des Fixierungsstifts in das Gleitstück bei der Montage erleichtert.

Bei einer bevorzugten Ausführungsform sind das Gleitstück und der Fixierungsstift als gemeinsames Spritzgussteil gefertigt. Diese Konkretisierung unterstreicht nochmals den Gedanken, die Herstellung der Gleitlageranordnung günstig auszugestalten.

Bei einer bevorzugten konstruktiven Realisierung sind das Gleitstück und der Fixierungsstift über eine Kunststoffbrücke miteinander verbunden, welche derart angeordnet und/oder ausgebildet ist, dass diese nach einem Fixieren des Gleitstücks mit dem Fixierungsstift auf dem Schaltelement getrennt ist. Die Kunststoffbrücke kann als eine den Fixierungsstift vollständig umlaufende Kunststoffhaut ausgebildet sein. Bei alternativen Ausführungsformen sind Fixierungsstift und Gleitstück über Kunststoffbrückenabschnitte verbunden, die gemeinsam die Kunststoffbrücke bilden.

Bei einer möglichen Ausgestaltung ist der Fixierungsstift als ein Spannstift ausgebildet, der bei einem Fixieren des Gleitstücks auf dem Schaltelement das Schaltelement kraft- und/oder reibschlüssig klemmt. Insbesondere ist die Länge des Fixierungsstifts so gewählt, dass der Fixierungsstift im fixierten Zustand mit dem Gleitstück außenseitig bündig abschließt oder in dem Gleitstück versenkt ist. Die mit dem Schaltelement in kraft- bzw. reibschlüssige Verbindung tretende Unterseite des Spannstifts weist optional Oberflächenstrukturierungen auf, welche einen Reibschluss mit dem Schaltelement unterstützen.

Bei einer anderen möglichen Ausführungsform ist der Fixierungsstift als Sperrstift ausgebildet, der bei einem Fixieren des Gleitstücks auf dem Schaltelement das Schaltelement formschlüssig sperrt. Hierbei ist bevorzugt vorgesehen, dass der Sperrstift bei dem Fixieren in das Schaltelement eingreift oder das Schaltelement durchgreift. Das Schaltelement weist hierfür ein Sackloch oder eine Durchgangsbohrung auf, in die der Sperrstift ein- bzw. durchgreifen kann. Die Länge des Sperrstifts ist dabei vorzugsweise so gewählt, dass der Sperrstift in einem fixierten Zustand an einer oder an beiden Seiten mit dem Gleitstück bündig abschließt oder in diesem versenkt angeordnet ist.

Bei einer bevorzugten Realisierung ist das Schaltelement als eine Schaltschiene ausgebildet, welche in der Schaltvorrichtung linear verschiebbar und/oder dreh- bzw. schwenkbar angeordnet ist, um Schalt- und/oder Wählbewegungen in der Schaltvorrichtung zu übertragen. Prinzipiell kann die Gleitlageranordnung in Abhängigkeit der Anwendung an jeder Position auf dem Schaltelement aufgesetzt werden, bevorzugt wird die Gleitlageranordnung auf einem freiem Endabschnitt des Schaltelements montiert. Bei alternativen Ausführungsformen sitzt die Gleitlageranordnung in einem Mittenbereich der Schaltschiene und weist optional ergänzend weitere Funktionselemente auf, wie zum Beispiel Rastkonturen zum Eingriff für Rastiernocken oder Eingriffsorgane zum Eingriff von Schaltgabeln oder dergleichen.

Bei einer bevorzugten und technisch nahen Anwendung der Erfindung ist die Schaltschiene aus einem Flachmaterial ausgebildet, so dass die Aufnahme des Gleitstücks eine komplementär zu dem Flachmaterial ausgebildete und insbesondere im Querschnitt rechteckige Aufnahmekontur zeigt.

Bevorzugt ist weiterhin, dass das Gleitstück als eine Gleithülse ausgebildet ist, die das Schaltelement in einer Ebene senkrecht zur Längserstreckung des Schaltelements vollständig oder abschnittsweise umschließt. Für den Fall, dass die Gleithülse auf den Endabschnitt des Schaltelements aufgesetzt wird, ist es bevorzugt, dass die Gleithülse den Endabschnitt vollständig umschließt, insbesondere um - auch ohne Verwendung des Fixierungsstiftes - bereits einen verliersicheren Kraft- bzw. Reibschluss zu erlauben.

Insbesondere um die gleitende Lagerung reibungsarm auszugestalten, ist vorgesehen, dass das Gleitstück im Bereich des Gleitabschnitts im Querschnitt in einer Ebene senkrecht zur Längserstreckung des Schaltelements eine kreisrunde Kontur aufweist. Diese Ausbildung hat den Vorteil, dass eine Verklemmung zwischen Gleitstück und Lagerungspartner sowohl bei einer Linearbewegung als auch bei einer Drehbewegung minimiert bzw. ausgeschlossen wird.

In dem Gleitstück ist vorzugsweise ein Führungskanal eingeformt, in den der Fixierstift einschiebbar ist und der in der Schieberichtung den Aufnahmebereich kreuzt. Zur Erleichterung des Einführens des Fixierungsstifts kann optional vorgesehen sein, dass der Führungskanal und/oder der Fixierungsstift eine Führungskontur, zum Beispiel in Form eines konischen Abschnitts aufweist bzw. aufweisen. Bei einer möglichen Ausführungsform endet der Führungskanal in dem Aufnahmebereich, jedoch ist es bevorzugt, dass der Führungskanal in Schieberichtung nach dem Aufnahmebereich fortgeführt ist und/oder das Gleitstück vollständig durchstößt. Insbesondere bei der letzten Ausführungsform zeigt sicher der fertigungstechnische Vorteil, dass bei einem Spritzgießen der Gleitlageranordnung der Bereich des Führungskanals durch eine seitlich eingeschobene Formvorrichtung freigehalten werden kann.

Optional weist das Gleitstück weitere An- bzw. Einformungen auf, welche an der Außenseite des Gleitstücks und/oder im Bereich des Gleitabschnitts vorgesehen sind und beispielsweise nutenartig in Längsrichtung des Schaltelements verlaufen. Diese An- bzw. Einformungen dienen dazu, im Bereich des Lagerungspartners ein Entweichen bzw. eine Zuführung von Luft und/oder Schmierstoffen zu erlauben.

Ferner kann vorgesehen sein, dass der Aufnahmebereich ein Entlüftungsloch aufweist, so dass beim Einsetzen des Schaltelements in das Gleitstück die Luft aus dem Aufnahmebereich entweichen kann.

Ein weiterer Gegenstand der Erfindung betrifft eine Schaltvorrichtung zum Schalten eines Getriebes, insbesondere Schaltgetriebes, mit einem Schaltelement, wobei das Schaltelement durch eine Gleitlageranordnung gelagert ist, die durch Montage der Gleitlageranordnung nach einem der vorhergehenden Ansprüche oder wie sie zuvor beschrieben wurde, gebildet ist. Die Verwendung der Gleitlageranordnung in der Schaltvorrichtung ist beispielsweise dadurch nachweisbar, dass Reste der Kunststoffbrücke im Bereich des Führungskanals und/oder im Bereich des Fixierungsstifts zu erkennen sind.

Bei einer Montage der erfindungsgemäßen Gleitlageranordnung wird diese als einstückiges Bauteil, insbesondere Kunststoffspritzgussteil, auf das Schaltelement aufgesetzt und in einem nächsten Schritt durch eine Krafteinwirkung, insbesondere Prägung, Pressung oder dergleichen, in das Gleitstück eingetrieben, wobei die Kunststoffbrücke getrennt wird. Um eine verliersichere Montage des Fixierungsstifts in dem Gleitstück sicherzustellen, ist der Fixierungsstift gegenüber dem Führungskanal vorzugsweise im Übermaß ausgebildet, so dass ein Presssitz entsteht. Alternativ oder ergänzend können die Wände des Führungskanals und/oder des Fixierungsstifts mit reibungserhöhenden und/oder formschlussbildenden Strukturen versehen sein. Auch ist eine bauchige oder abgestufte Form des Sperrstifts möglich, so dass dieser nach der Montage in dem Gleitstück formschlüssig gehalten wird.

Weitere Merkmale, Vorteile und Wirkungen der Erfindung ergeben sich aus der nachfolgenden Beschreibung eines bevorzugten Ausführungsbeispiels der Erfindung. Dabei zeigen:
- Fig. 1: eine schematische, dreidimensionale Darstellung einer Gleitlageranordnung aufgesetzt auf eine Schaltschiene im fixierten Zustand als ein Ausführungsbeispiel der Erfindung;
- Fig. 2: eine schematische, dreidimensionalen Darstellung der Gleitlageranordnung in Figur 1 in einem unmontierten Zustand;
- Fig. 3: eine schematische, dreidimensionale Darstellung der Gleitlageranordnung in den Figuren 1 und 2 in einem montierten Zustand, wobei die Schaltschiene in Figur 1 nicht dargestellt ist.

Einander entsprechende oder gleiche Teile sind in den Figuren jeweils miteinander entsprechenden oder gleichen Bezugszeichen versehen.

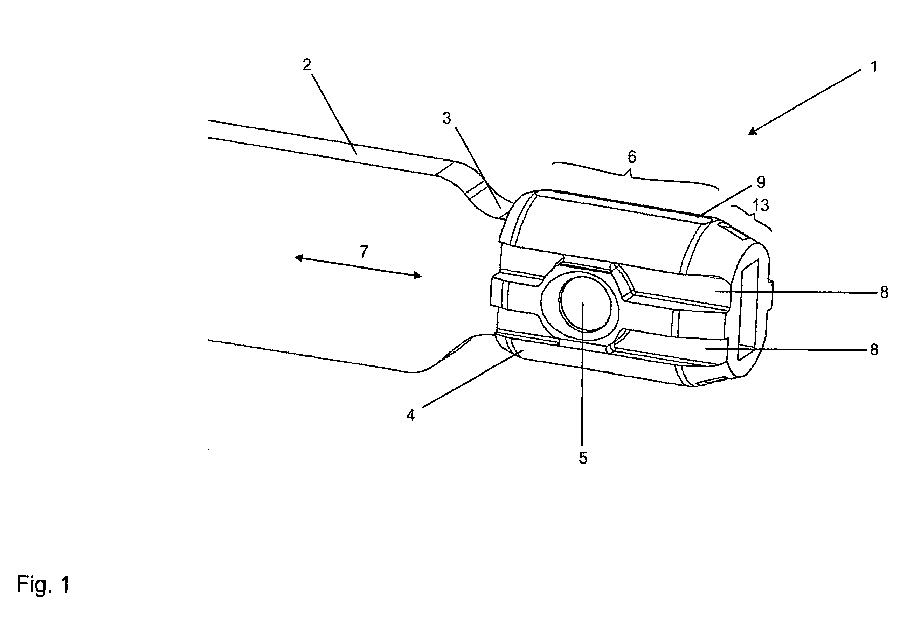

Die Figur 1 zeigt in einer schematischen, dreidimensionalen Darstellung eine Gleitlageranordnung 1, welche auf eine Schaltschiene 2 auf deren freien Endabschnitt 3 aufgesetzt ist. Die Gleitschiene 2 ist Bestandteil einer nicht dargestellten Schaltvorrichtung, welche zur Übertragung von Schalt- und/oder Wählbewegungen, zum Beispiel von einem Ganghebel zu einem Getriebe ausgebildet und/oder angeordnet ist. Die Gleitschiene 2 ist aus einem metallischen Flachmaterial gebildet und weist durchgehend eine einheitliche Dicke auf. Vor dem Bereich des Endabschnitts 3 verjüngt sich die Breite der Gleitschiene 2 zur Bildung des Endabschnitts 3. Auf der Schaltschiene 2 können neben der Gleitlageranordnung 1 noch weitere Gleitlageranordnungen angeordnet sein, welche beispielsweise Funktionselemente, Rastkonturen für Rastierbolzen, Eingriffsorgane für Schaltgabeln oder dergleichen tragen. Auch diese weiteren Gleitlageranordnungen können analog zu der nachfolgenden Fixierung der Gleitlageranordnung 1 fixiert sein.

Die Gleitlageranordnung 1 weist eine Gleithülse 4 auf, welche mittels eines Sperrstifts 5 auf dem Endabschnitt 3 der Schaltschiene 2 formschlüssig fixiert ist, wobei die Gleithülse 4 und der Sperrstift 5 aus Kunststoff sind, wie z.B. Polyamid, PA 6.6 und/oder einem Kunststoff mit einem Glasfaseranteil von insbesondere 25% - 35%. Die Gleithülse 4 zeigt einen Gleitabschnitt 6, welcher zur gleitenden Lagerung mit einem nicht dargestellten Lagerungspartner ausgebildet ist. Der Lagerungspartner ist beispielsweise als eine zylindrische Aussparung eines Gehäuses realisiert, welches die Schaltschiene 2 bzw. die Schaltvorrichtung zumindest abschnittsweise umschließt. Im Querschnitt weist die Gleithülse 4 im Bereich des Gleitabschnitts 6 eine kreisrunde Grobkontur auf, so dass eine verklemmungsfreie Lagerung der Schaltschiene 2 in dem Lagerungspartner in Bezug auf eine Linearverschiebung gemäß Pfeil 7 in dem Lagerungspartner gewährleistet ist. Optional und insbesondere bei abgewandelten Ausführungsformen erlaubt der kreisrunde Querschnitt des Gleitabschnitts 6 auch eine Lagerung einer Drehbewegung um die Längsachse der Schaltschiene 2. Bei einer optionalen Ausführungsform ist die äußere Mantelfläche der Gleithülse 4 abweichend von einer zylindrischen Grobform ausgebildet, indem die Mantelfläche nach außen ballig gewölbt ist. Der Mantel der Gleithülse 4 ist von in Längsrichtung verlaufenden Nuten 8 und 9 durchzogen, wobei die Nuten 8 und 9 einerseits ein Entweichen von Luft im Bereich des Lagerungspartners erlauben, zum Beispiel, wenn dieser als ein Sackloch in dem Gehäuse ausgebildet ist, andererseits sind die Nuten 8, 9 aus gieß- und spritztechnischen Gründen und zur Materialminimierung vorgesehen.

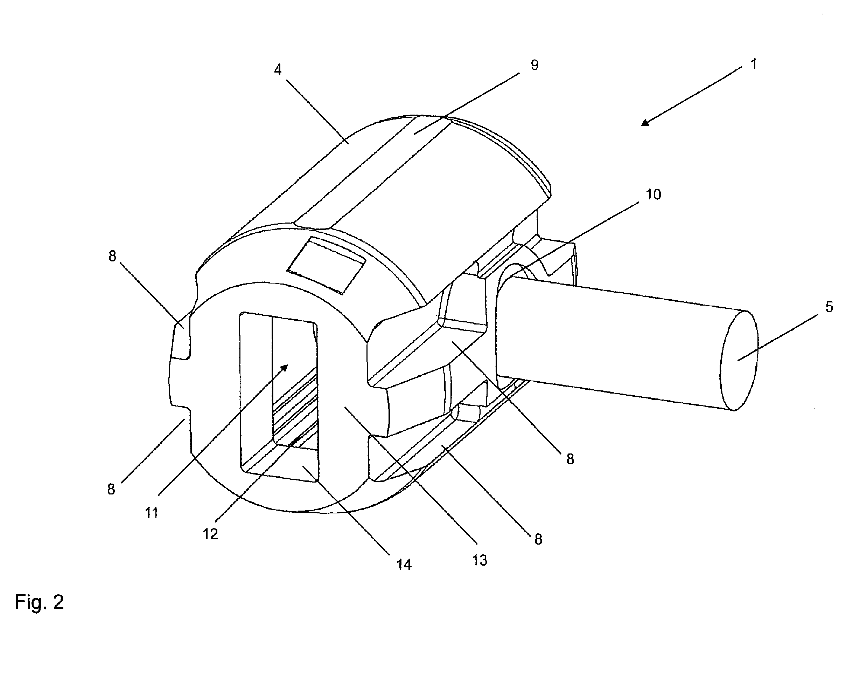

Die Figur 2 zeigt die Lageranordnung 1 in Figur 1 in einer schematischen, dreidimensionalen Darstellung in einem unmontierten Zustand, wobei der Sperrstift 5 über einen Verbindungsbereich 10 einstückig mit der Gleithülse 4 ausgebildet ist. Die Verbindung in dem Verbindungsbereich 10 ist beispielsweise als eine umlaufende Kunststoffhaut ausgebildet, welche so dimensioniert ist, dass bei einem Eindrücken oder Einprägen des Sperrstifts 5 in die Gleithülse 4 diese getrennt wird. Diese Ausbildung hat den Vorteil, dass die Gleitlageranordnung 1 als ein gemeinsames Kunststoffspritzgussteil gefertigt werden kann und nicht - wie aus dem Stand der Technik bekannt - die beiden Teile Sperrstift 5 und Gleithülse 4 separat zu fertigen sind, was zu einer Reduzierung der Herstellungskosten führt. Ein weiterer Vorteil ergibt sich daraus, dass in einem unmontierten Zustand die Gleithülse 4 und der Sperrstift 5 unverlierbar miteinander verbunden sind, so dass die Anzahl der zu lagernden Teile und damit der Aufwand für eine Lagerhaltung verringert werden kann. Ferner kann eine unbeabsichtigte Vertauschung des Sperrstifts 5 mit anderen Sperrstiften ausgeschlossen werden. Als ein nächster Vorteil ist zu sehen, dass der Sperrstift 5 bereits in der Gleithülse vorpositioniert ist, so dass der Montagevorgang vereinfacht ist.

Die Form bzw. Dimensionierung der Kunststoffbrücke ist so gewählt, dass bei einer Trennung der Kunststoffbrücke weder der Sperrstift 5 noch die Gleithülse 4 funktionsbeeinträchtigend beschädigt werden.

Die Figur 2 erlaubt auch einen Blick in den Innenraum der Gleithülse 4, welche als eine Aufnahme 11 ausgebildet ist. Die in Figur 2 nicht dargestellte Eingangsöffnung der Aufnahme 8 ist dabei so ausgebildet, dass diese komplementär zu dem Endabschnitt 3 der Schaltschiene 2 gestaltet ist und ergänzend hierzu Strukturierungen 12 aufweist, welche als sich in Längsrichtung erstreckende Profilierungen ausgebildet sind, die den freien Querschnitt in der Aufnahme 11 derart verringern, dass der Endabschnitt 3 in der Aufnahme 8 kraft-und/oder reibschlüssig aufgenommen wird.

Der freie Endbereich 13 der Gleithülse 4 weist eine konische Form auf, welche als eine Einführhilfe der Gleithülse 4 in den Lagerpartner, insbesondere in ein Sackloch in dem Gehäuse ausgebildet ist. In dem Endbereich 13 ist eine Endwand 14 mit einem rechteckigen Fenster 15 ausgebildet, wobei die Endwand 14 innenseitig in der Aufnahme 11 als ein Endanschlag zur formschlüssigen Aufnahme der Schaltschiene 2 bzw. des Abschnitt 3 wirkt. Das Fenster 15 bildet einen Entlüftungsbereich, aus dem die Luft aus der Aufnahme 11 entweichen kann, wenn der Endabschnitt 3 in die Aufnahme 11 eingeschoben wird.

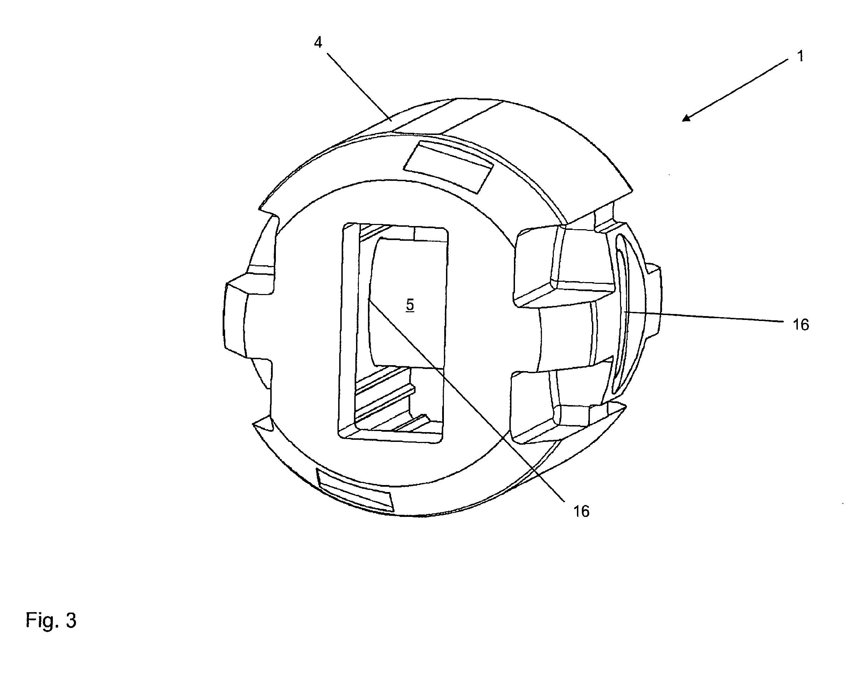

Die Figur 3 zeigt die Gleitlageranordnung 1 in einem montierten Zustand, wobei zur besseren Illustration die Schaltschiene 2 zeichnerisch unterdrückt ist. In dem in Figur 3 gezeigten Zustand der Gleitlageranordnung 1 ist der Sperrstift 5 vollständig in einen Führungskanal 16 eingefahren, welcher sich quer zur Längserstreckung der Schaltschiene 2 durch die Gleithülse 4 erstreckt und als Durchgangsöffnung ausgebildet ist. Der Sperrstift 5 ist auf beiden Seiten der Gleithülse 4 bündig und/oder versenkt angeordnet und durch die Gleithülse 4 kraft- und/oder reibschlüssig gehalten. Der Kraft- bzw. Reibschluss kann beispielsweise dadurch erreicht werden, dass der Durchmesser des Sperrstifts 5 geringfügig größer oder im Übermaß zu dem Durchmesser des Führungskanals 16 ausgebildet ist. Die Schaltschiene 2 verfügt in ihrem Endabschnitt 3 über eine Durchgangsöffnung (nicht gezeigt), welche ebenfalls an den Durchmesser des Sperrstifts 5 zu dessen Durchführung angepasst ist, so dass der Endabschnitt 3 und damit die Schaltschiene 2 formschlüssig mit der Gleitlageranordnung 1 verbunden ist bzw. durch den Sperrstift 5 gesperrt ist.

### Bezugszeichenliste

- 1: Gleitlageranordnung
- 2: Schaltschiene
- 3: Endabschnitt
- 4: Gleithülse
- 5: Sperrstift
- 6: Gleitabschnitt
- 7: Pfeil
- 8,9: Nuten
- 10: Verbindungsbereich
- 11: Aufnahme
- 12: Strukturierung
- 13: Endbereich
- 14: Endwand
- 15: Fenster
- 16: Führungskanal

## Patentansprüche

1. Gleitlageranordnung (1) mit einem Gleitstück (4) zum Aufsetzen auf ein bewegbares Schaltelement (2) einer Schaltvorrichtung, welche zum Schalten eines Getriebes ausgebildet ist, wobei das Gleitstück (4) eine Aufnahme für das bewegbare Schaltelement (2) und einen Gleitabschnitt (6) zur gleitenden Lagerung des Schaltelements (2) gegenüber einem *mit einem* Gehäuse *der Schaltvorrichtung verbundenen* Lagerungspartner aufweist, und mit einem Fixierungsstift (5) zur Fixierung des Gleitstücks (4) an dem Schaltelement (2), *wobei der Fixierungsstift in ein quer durch das Gleitstück durchgehendes und die Aufnahme kreuzendes Loch sowie in eine entsprechende Bohrung in dem Schaltelement eingepresst ist,* **gekennzeichnet dadurch, dass** in einem unmontierten Zustand der *Gleitlageranordnung* (1) *vor dem Aufsetzen des Gleitstückes (4) auf das Schaltelement* (2), der Fixierungsstift (5) und das Gleitstück (4) einstückig *als gemeinsames Kunststoffteil miteinander ausgebildet* sind.

2. Gleitlageranordnung (1) nach Anspruch *1,* **dadurch gekennzeichnet, dass** das Gleitstück (4) und der Fixierungsstift (5) über eine Kunststoffbrücke (10) miteinander verbunden sind, wobei die Kunststoffbrücke (10) so beschaffen ist, dass diese nach einem Fixieren des Gleitstücks (4) mit dem Fixierungsstift (5) auf dem Schaltelement (2) getrennt ist.

3. Gleitlageranordnung (1) nach einem der vorhergehenden Ansprüche, **dadurch gekennzeichnet, dass** der Fixierungsstift (5) als Spannstift ausgebildet ist, der bei einem Fixieren des Gleitstücks (4) auf dem Schaltelement (2) das Schaltelement (2) kraft- und/oder reibschlüssig klemmt.

4. Gleitlageranordnung (1) nach einem der vorhergehenden Ansprüche, **dadurch gekennzeichnet, dass** der Fixierungsstift (5) als Sperrstift ausgebildet ist, der bei einem Fixieren des Gleitstücks (4) auf dem Schaltelement (2) das Schaltelement (2) formschlüssig sperrt.

5. Gleitlageranordnung (1) nach Anspruch 5, **dadurch gekennzeichnet, dass** der Sperrstift (5) derart ausgebildet ist, dass der Sperrstift (5) bei einem Fixieren des Gleitstücks (4) auf dem Schaltelement (2) in das Schaltelement (2) eingreift oder das Schaltelement (2) durchgreift.

6. Gleitlageranordnung (1) nach einem der vorhergehenden Ansprüche, **dadurch gekennzeichnet, dass** das Schaltelement als eine Schaltschiene (2) ausgebildet ist, auf dessen freien Endabschnitt (3) das Gleitstück (4) aufgesetzt ist.

7. Gleitlageranordnung (1) nach Anspruch 7, **dadurch gekennzeichnet, dass** die Schaltschiene (2) aus einem Flachmaterial gebildet ist.

8. Gleitlageranordnung (1) nach einem der vorhergehenden Ansprüche, **dadurch gekennzeichnet, dass** das Gleitstück (4) als Gleithülse ausgebildet ist, die das Schaltelement (2) in einer Ebene senkrecht zur Längserstreckung des Schaltelements (2) vollständig oder abschnittweise umschließt.

9. Gleitlageranordnung (1) nach einem der vorhergehenden Ansprüche, **dadurch gekennzeichnet, dass** das Gleitstück (4) im Bereich des Gleitabschnitts (4) im Querschnitt in einer Ebene senkrecht zur Längserstreckung des Schaltelements (2) eine kreisrunde Kontur aufweist.

10. Gleitlageranordnung (1) nach einem der vorhergehenden Ansprüche, **dadurch gekennzeichnet, dass** das Gleitstück (4) einen Führungskanal (16) aufweist, in den der Fixierungsstift (5) einschiebbar ist und der in der Schieberichtung den Aufnahmebereich (11) kreuzt.

11. Gleitlageranordnung (1) nach einem der vorhergehenden Ansprüche, **dadurch gekennzeichnet, dass** der Führungskanal (16) in dem Aufnahmebereich (11) endet oder in Schieberichtung nach dem Aufnahmebereich (11) sacklochartig fortgeführt ist und/oder als Durchgangsöffnung ausgebildet ist.

12. Schaltvorrichtung (1) zum Schalten eines Getriebes mit einem Schaltelement (2), **dadurch gekennzeichnet, dass** das Schaltelement (2) durch eine Gleitlageranordnung (1) gelagert ist, die durch Montage der Gleitlageranordnung (1) nach einem der vorhergehenden Ansprüche gebildet ist.

## Claims

1. Sliding bearing arrangement (1) having a sliding piece (4) for mounting on a movable shift element (2) of a shift device designed for performing gear shifts in a gearbox, wherein the sliding piece (4) has a receptacle for the movable shift element (2) and has a sliding portion (6) for mounting the shift element (2) slidably with respect to a mounting partner connected to a housing of the shift device, and having a fixing pin (5) for fixing the sliding piece (4) to the shift element (2), wherein the fixing pin is pressed into a hole which extends transversely through the sliding piece and which intersects the receptacle and into a corresponding bore in the shift element, **characterized in that**, in an unassembled state of the sliding bearing arrangement (1) before the mounting of the sliding piece (4) on the shift element (2), the fixing pin (5) and the sliding piece (4) are formed in one piece with one another as a common plastic part.

2. Sliding bearing arrangement (1) according to Claim 1, **characterized in that** the sliding piece (4) and the fixing pin (5) are connected to one another via a plastic bridge (10), wherein the plastic bridge (10) is designed so as to be severed after fixing of the sliding piece (4) to the shift element (2) by means of the fixing pin (5).

3. Sliding bearing arrangement (1) according to one of the preceding claims, **characterized in that** the fixing pin (5) is designed as a clamping pin which clamps the shift element (2) in a non-positively locking and/or frictionally engaging manner during fixing of the sliding piece (4) to the shift element (2) .

4. Sliding bearing arrangement (1) according to one of the preceding claims, **characterized in that** the fixing pin (5) is designed as a retention pin which retains the shift element (2) in a positively locking manner during fixing of the sliding piece (4) to the shift element (2).

5. Sliding bearing arrangement (1) according to Claim 4, **characterized in that** the retention pin (5) is designed such that the retention pin (5) engages into the shift element (2) or extends through the shift element (2) during fixing of the sliding piece (4) to the shift element (2).

6. Sliding bearing arrangement (1) according to one of the preceding claims, **characterized in that** the shift element is designed as a shift rail (2), on the free end portion (3) of which the sliding piece (4) is mounted.

7. Sliding bearing arrangement (1) according to Claim 6, **characterized in that** the shift rail (2) is formed from a flat material.

8. Sliding bearing arrangement (1) according to one of the preceding claims, **characterized in that** the sliding piece (4) is formed as a sliding sleeve which, in a plane perpendicular to the longitudinal extent of the shift element (2), surrounds the shift element (2) completely or in sections.

9. Sliding bearing arrangement (1) according to one of the preceding claims, **characterized in that** the sliding piece (4) has, in the region of the sliding portion (6), a circular contour in cross section in a plane perpendicular to the longitudinal extent of the shift element (2).

10. Sliding bearing arrangement (1) according to one of the preceding claims, **characterized in that** the sliding piece (4) has a guide channel (16) into which the fixing pin (5) can be inserted and which intersects the receiving region (11) in the insertion direction.

11. Sliding bearing arrangement (1) according to one of the preceding claims, **characterized in that** the guide channel (16) ends in the receiving region (11) or is continued beyond the receiving region (11) in the insertion direction in the form of a blind bore and/or is formed as a through opening.

12. Shift device (1) for performing gear shifts in a gearbox, having a shift element (2), **characterized in that** the shift element (2) is mounted by means of a sliding bearing arrangement (1) formed by assembly of the sliding bearing arrangement (1) according to one of the preceding claims.

## Revendications

1. Ensemble de palier à glissement (1) avec une pièce de glissement (4) à poser sur un élément de commutation mobile (2) d'un dispositif de commutation, qui est conçu pour commuter un mécanisme, dans lequel la pièce de glissement (4) présente un logement pour l'élément de commutation mobile (2) et une partie de glissement (6) pour l'appui glissant de l'élément de commutation (2) par rapport à un partenaire de palier assemblé à un boîtier du dispositif de commutation, et avec une tige de fixation (5) pour la fixation de la pièce de glissement (4) sur l'élément de commutation (2), dans lequel la tige de fixation est enfoncée dans un trou passant transversalement à travers la pièce de glissement et croisant le logement ainsi que dans un alésage correspondant dans l'élément de commutation, **caractérisé en ce que**, dans un état non monté de l'ensemble de palier à glissement (1) avant la pose de la pièce de glissement (4) sur l'élément de commutation (2), la tige de fixation (5) et la pièce de glissement (4) sont réalisées d'une seule pièce l'une avec l'autre sous la forme d'une pièce commune en matière plastique.

2. Ensemble de palier à glissement (1) selon la revendication 1, **caractérisé en ce que** la pièce de glissement (4) et la tige de fixation (5) sont reliées l'une à l'autre au moyen d'un pont en matière plastique (10), dans lequel le pont en matière plastique (10) est conçu de telle manière qu'il soit séparé après une fixation de la pièce de glissement (4) sur l'élément de commutation (2) au moyen de la tige de fixation (5).

3. Ensemble de palier à glissement (1) selon l'une quelconque des revendications précédentes, **caractérisé en ce que** la tige de fixation (5) est réalisée sous la forme d'une goupille élastique, qui bloque l'élément de commutation (2) par force et/ou par frottement lors d'une fixation de la pièce de glissement (4) sur l'élément de commutation (2).

4. Ensemble de palier à glissement (1) selon l'une quelconque des revendications précédentes, **caractérisé en ce que** la tige de fixation (5) est réalisée sous la forme d'une broche à déclic, qui bloque l'élément de commutation (2) par complémentarité de forme lors d'une fixation de la pièce de glissement (4) sur l'élément de commutation (2).

5. Ensemble de palier à glissement (1) selon la revendication 4, **caractérisé en ce que** la broche à déclic (5) est réalisée de telle manière que la broche à déclic (5) s'engage dans l'élément de commutation (2) ou traverse l'élément de commutation (2) lors d'une fixation de la pièce de glissement (4) sur l'élément de commutation (2).

6. Ensemble de palier à glissement (1) selon l'une quelconque des revendications précédentes, **caractérisé en ce que** l'élément de commutation est réalisé sous la forme d'une barre de commutation (2), dont la partie d'extrémité libre (3) porte la pièce de glissement (4).

7. Ensemble de palier à glissement (1) selon la revendication 6, **caractérisé en ce que** la barre de commutation (2) est formée à partir d'un matériau plat.

8. Ensemble de palier à glissement (1) selon l'une quelconque des revendications précédentes, **caractérisé en ce que** la pièce de glissement (4) est réalisée sous la forme d'une douille de glissement, qui entoure complètement ou localement l'élément de commutation (2) dans un plan perpendiculaire à l'extension longitudinale de l'élément de commutation (2).

9. Ensemble de palier à glissement (1) selon l'une quelconque des revendications précédentes, **caractérisé en ce que** la pièce de glissement (4) présente en section transversale dans la région de la partie de glissement (6), un contour circulaire dans un plan perpendiculaire à l'extension longitudinale de l'élément de commutation (2).

10. Ensemble de palier à glissement (1) selon l'une quelconque des revendications précédentes, **caractérisé en ce que** la pièce de glissement (4) présente un canal de guidage (16), dans lequel la tige de fixation (5) peut être introduite et qui croise la région du logement (11) dans la direction d'introduction.

11. Ensemble de palier à glissement (1) selon l'une quelconque des revendications précédentes, **caractérisé en ce que** le canal de guidage (16) se termine dans la région du logement (11) ou se poursuit en forme de trou borgne après la région du logement (11) dans la direction d'introduction et/ou est réalisé sous la forme d'une ouverture de passage.

12. Dispositif de commutation (1) pour la commutation d'un mécanisme avec un élément de commutation (2), **caractérisé en ce que** l'élément de commutation (2) est supporté par un ensemble de palier à glissement (1), qui est formé par le montage de l'ensemble de palier à glissement (1) selon l'une quelconque des revendications précédentes.
